# EUROPEAN PATENT APPLICATION

(11) **EP 4 681 923 A1**
(43) Date of publication of application: **21.01.2026**
(21) Application number: 25189536.3
(22) Date of filing: 15.07.2025
(51) Int. Cl.: B41J 2/14, B41J 11/00, B41J 15/04, G06F 3/12, G06K 15/02

(54) **PRINTING APPARATUS, PRINTING PROGRAM, AND PRINTING METHOD**

(30) Priority: 16.07.2024 JP 2024113367
(71) Applicant: Brother Kogyo Kabushiki Kaisha, Nagoya, Aichi 467-8561 (JP)
(72) Inventor: ITO, Koichi, Nagoya, 467-8562 (JP); KOZAKI, Takashi, Nagoya, 467-8562 (JP)
(74) Representative: J A Kemp LLP

(57) **Abstract**

A printing apparatus includes a print part, a data transfer part, and a controller. The data transfer part has a storage part to store image data, and generates printing data using the image data stored in the storage part. The print part prints the image on a print medium based on the printing data. The controller instructs the data transfer part to execute a predetermined process with respect to the image data and to transfer the printing data to the print part. After executing the predetermined process with respect to the image data, the data transfer part executes an obtaining process of obtaining position information indicating a print position of the image in the print medium, and generates the printing data based on the position information and the image data after the predetermined process.

## Description

### TECHNICAL FIELD

The present invention relates to a printing apparatus which prints an image on a print medium, a printing program usable in the printing apparatus, and a printing method of printing an image on a print medium using the printing apparatus.

### BACKGROUND ART

A known printing apparatus prints an image in which a first basic pattern image and a second basic pattern image are disposed side by side in a main scanning direction, and a plurality of first basic pattern images including the first basic pattern image are disposed continuously and repeatedly in a sub scanning direction and a plurality of second basic pattern images including the second basic pattern image are disposed continuously and repeatedly in the sub scanning direction (Patent Literature 1). In this printing apparatus, recording data (printing data) is generated and stored in a buffer (storage part). In the recording data, the first basic pattern images are continuously and repeatedly disposed, and the second basic pattern images are continuously and repeatedly disposed. Further, during a printing process, the recording data stored in the buffer is read out as a film (print medium) is being conveyed, and an ink is ejected from a recording head to the film, based on the recording data. As a result, an image corresponding to the recording data is printed on the film.

### Citation list

### [Patent Literature]

Patent Literature 1: Japanese Patent Application Laid-open No. JP 2019-147320

### SUMMARY

### Problem to be solved by the invention:

In the above-described printing apparatus, the print position of the image in the print medium is to be changed, in some cases, while the image is (being) printed on the print medium. In this case, the printing based on the changed print position is not performed until the printing of the image based on the printing data stored in the storage part is completed. As a result, a printed item printed between the receipt of an instruction for changing the print position and the actual change of the print position of the image in the print medium is wasted.

An object of the present invention is to solve the above-described problem and to provide a technique which can contribute to shortening the time from the receipt of the instruction for changing the print position to the actual change of print position, in a case where an image is being printed on a print medium.

### Solution to the problem

A printing apparatus according to an aspect of the present invention is a printing apparatus configured to print an image on a print medium. The printing apparatus includes: a data transfer part having a storage part configured to store image data indicating the image, the data transfer part being configured to generate printing data from the image data stored in the storage part; a print part configured to print the image on the print medium based on the printing data; and a controller configured to instruct the data transfer part to execute a predetermined process with respect to the image data and to transfer the printing data to the print part. The data transfer part is configured to execute: an obtaining process of obtaining position information indicating a print position of the image in the print medium, after executing the predetermined process with respect to the image data; and a first generating process of generating the printing data based on the image data and the position information, after executing the predetermined process with respect to the image data. The position information indicates the print position of the image in the print medium in a conveyance direction of the print medium, the print position of the image in the print medium in a width direction of the print medium orthogonal to the conveyance direction, or both the print position of the image in the print medium in the conveyance direction and the print position of the image in the print medium in the width direction.

A printing method according to another aspect of the present invention is a printing method for printing an image on a print medium by a printing apparatus including a print part and a storage part. The printing method includes: causing the storage part to store image data indicating the image; executing a predetermined process with respect to the image data stored in the storage part; obtaining position information indicating a print position of the image in the print medium, after executing the predetermined process with respect to the image data; generating printing data based on the image data and the position information, after executing the predetermined process with respect to the image data; and causing the print part to perform printing the image on the print medium based on the printing data. The position information indicates the print position of the image in the print medium in a conveyance direction of the print medium, the print position of the image in the print medium in a width direction of the print medium orthogonal to the conveyance direction, or both the print position of the image in the print medium in the conveyance direction and the print position of the image in the print medium in the width direction.

A printing program according to yet another aspect of the present invention is a printing program for a printing apparatus configured to print an image on a print medium. The printing apparatus includes: a data transfer part having a storage part configured to store image data indicating the image, and the data transfer part being configured to generate printing data from the image data stored in the storage part; a print part configured to print the image on the print medium based on the printing data; and a controller configured to instruct the data transfer part to execute a predetermined process with respect to the image data and to transfer the printing data to the print part. The printing program causes the data transfer part to: execute the predetermined process with respect to the image data stored in the storage part, in accordance with instruction from the controller; obtain position information indicating a print position of the image in the print medium, after causing the data transfer part to execute the predetermined process with respect to the image data; generate the printing data based on the image data and the position information, after causing the data transfer part to execute the predetermined process with respect to the image data; and transfer the printing data to the print part. The position information indicates the print position of the image in the print medium in a conveyance direction of the print medium, the print position of the image in the print medium in a width direction of the print medium orthogonal to the conveyance direction, or both the print position of the image in the print medium in the conveyance direction and the print position of the image in the print medium in the width direction.

### Effect of the invention

According to the present invention, the time from receipt of the instruction for changing the print position during printing an image on a print medium to the actual change of the print position can be shortened.

### BRIEF DESCRIPTION OF DRAWINGS

FIG. 1 is a view depicting the schematic configuration of a printing apparatus 100 of the present invention.
FIG. 2 is a schematic plan view of print parts 10A to 10H and a conveyor 200.
FIG. 3 is a schematic plan view of the print part 10A.
FIG. 4 is a view depicting the schematic configuration of a channel member 2 and an actuator member 3.
FIG. 5 is a view depicting the flows of various processes executed by a controller 30 and a data transfer part 20A during printing on a print medium M.
FIG. 6 is a flowchart indicating a print position information-updating process executed by the controller 30 during the printing on the print medium M.

### DESCRIPTION OF THE EMBODIMENT

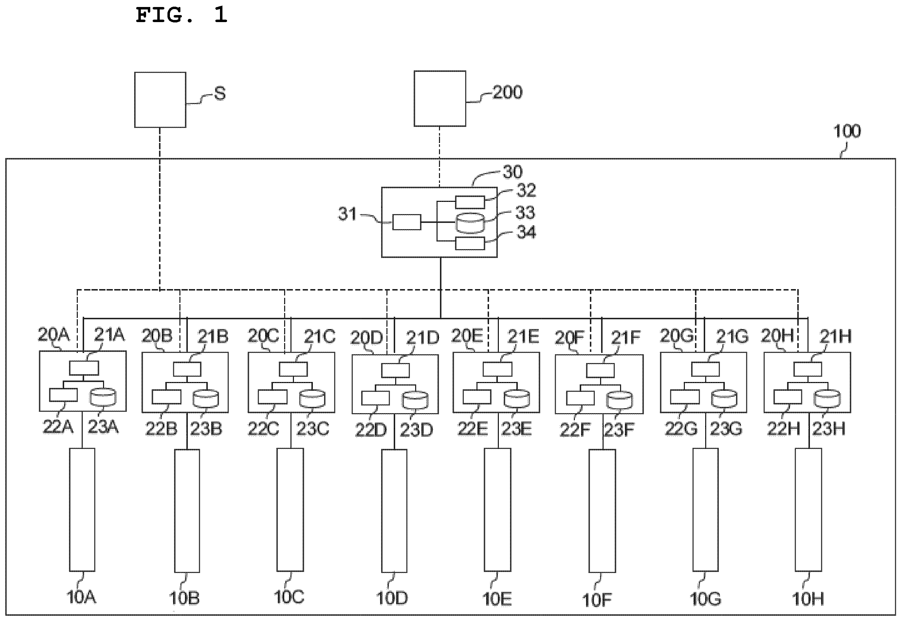

A printing apparatus 100 according to an embodiment of the present invention is a digital printing apparatus. As depicted in FIG. 1, the printing apparatus 100 includes print parts 10A to 10H, data transfer parts 20A to 20H, and a controller 30.

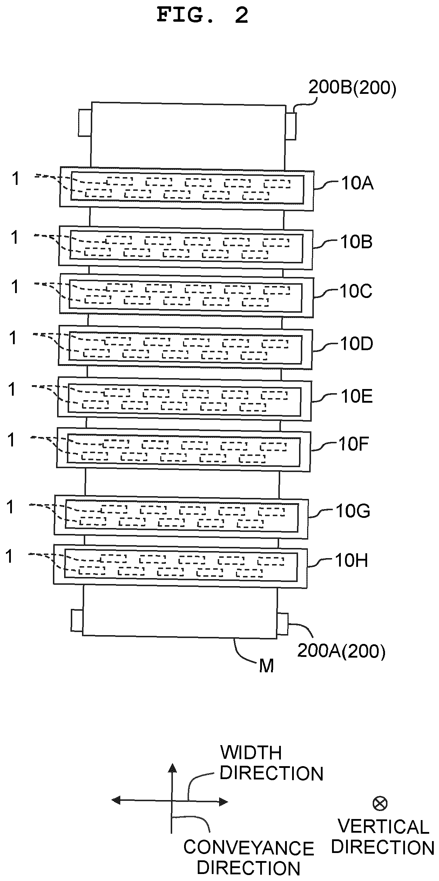

Each of the print parts 10A to 10H includes a plurality of heads 1 (see FIG. 2) configured to eject an ink. For example, the print parts 10A, 10B, 10C, 10D, 10E and 10F eject a black ink, a cyan ink, a violet ink, a magenta ink, an orange ink and a yellow ink, respectively. A white ink is ejected from each of the print parts 10G and 10H.

Each of the data transfer parts 20A to 20H is a computer such as a PC. The data transfer parts 20A to 20H include, respectively, processors 21A to 21H each of which is, for example, a CPU; memories 22A to 22H each of which is, for example, a RAM; and storage parts 23A to 23H each of which is, for example, a hard disk drive. Each of the processors 21A to 21H reads data and a program stored in the corresponding one of storage parts 23A to 23H temporarily to the corresponding one of memories 22A to 22H; and then each of the processors 21A to 21H executes various processes as described below, in accordance with the read data and program.

The controller 30 is also a computer such as a PC, and includes a processor 31 such as a CPU, a memory 32 such as a RAM, a storage part 33 such as a hard disk drive, and an input part 34. The processor 31 reads data and a program stored in the storage part 33 temporarily to the memory 32, and executes various processes which will be described later, in accordance with the read data and program.

The print parts 10A to 10H and the data transfer parts 20A to 20H are connected one-to-one. Further, the data transfer parts 20A to 20H are connected to the controller 30 via a network. Furthermore, as indicated with dashed lines in FIG. 1, the data transfer parts 20A to 20H are connected to an image generating server S disposed externally with respect to the printing apparatus 100. Moreover, as depicted in FIG. 1, the controller 30 is connected to the conveyor 200.

The image generating server S generates, with respect to each of the print parts 10A to 10H, image data of an image to be printed by each of the print parts 10A to 10H. In other words, the image generating server S generates image data with respect to each color of the ink. Further, the image generating server S compresses the image data generated with respect to each of the print parts 10A to 10H and transmits the image data to each of the data transfer parts 20A to 20H connected, respectively, to the print parts 10A to 10H. The processors 21A to 21H of the transfer parts 20A to 20H cause the storage parts 23A to 23H, respectively, to store the image data transmitted from the image generating server S.

Furthermore, the processors 21A to 21H of the data transfer parts 20A to 20H, respectively, execute various processes, which will be described later, with respect to the image data stored in the storage parts 23A to 23H in accordance with instructions from controller 30 so as to generate printing data, and then the processes 21A to 21H transfer the generated printing data, respectively, to the print parts 10A to 10H. Note that the controller 30 instructs the data transfer parts 20A to 20H to generate and transfer the printing data, based on conveyance data of a print medium M obtained from the conveyor 200.

The print parts 10A to 10H print images based on the printing data transferred from the data transfer parts 20A to 20H, respectively, on the print medium M (see FIG. 2) which is (being) conveyed by the conveyor 200.

Next, the print parts 10A to 10H and the conveyor 200 will be described, with reference to FIG. 2 to FIG. 4.

As depicted in FIG. 2, the print parts 10A to 10H are aligned in this order from the downstream side in the conveyance direction. The conveyance direction is a direction in which the print medium M, such as a rolled sheet, is conveyed by the conveyor 200. Each of the print parts 10A to 10H is long in a width direction. The width direction is a direction along the width of the print medium M and orthogonal to the vertical direction and the conveyance direction. Each of the print parts 10A to 10H is of a line type which ejects the ink to the print medium M in a state that the position of each of the print parts 10A to 10H is fixed.

For example, the black ink, cyan ink, violet ink, magenta ink, orange ink and yellow ink are supplied, respectively, to the print parts 10A to 10F disposed on the downstream side in the conveyance direction among the print parts 10A to 10H. For example, the white ink is supplied to each of the print parts 10G to 10H disposed on the upstream side in the conveyance direction among the print parts 10A to 10H. For example, ultra-violet ray curable inks (UV curable inks) curable by being irradiated with an ultra-violet ray (UV light) can be used as the above-described inks.

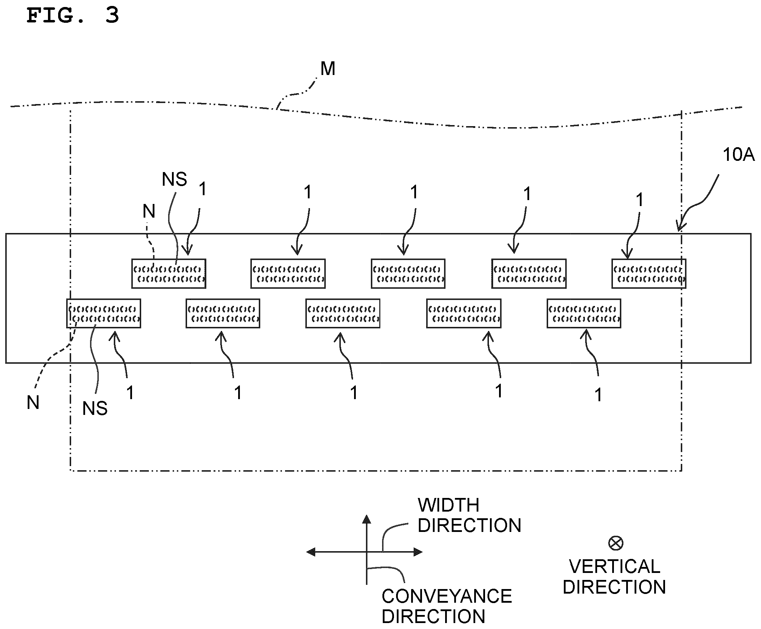

As depicted in FIG. 2, as an example, ten heads 1 are located at a lower end in the vertical direction of each of the print parts 10A to 10H. The ten heads 1 are disposed in a staggered manner in the width direction, in a state that the lower surfaces, respectively, of the ten heads 10 are located on the same plane. The lower surfaces, respectively, of the ten heads 1 are each a nozzle surface NS in which a plurality of nozzles N are open, as depicted in FIG. 3. In the nozzle surface NS, the plurality of nozzles N are disposed in the staggered manner in the width direction so as to form two nozzle arrays disposed side by side in the conveyance direction. Each of the two nozzle arrays extends in the width direction. Note that in the present embodiment, although each of the ten heads 1 has the two nozzle arrays, the number of the nozzle array may be one (one nozzle array), or three or more (three nozzle arrays or more).

The conveyor 200 includes a feeding roller 200A and a collecting roller 200B depicted in FIG. 2, and a plurality of non-illustrated conveying rollers. Further, the conveyor 200 includes a non-illustrated conveying motor connected to the feeding roller 200A and the collecting roller 200B. The feeding roller 200A and the collecting roller 200B are disposed side by side in the conveyance direction, with the feeding roller 200A being located upstream of the collecting roller 200B in the conveyance direction. In the conveyance direction, the print parts 10A to 10H are located between the feeding roller 200A and the collecting roller 200B. The plurality of conveying rollers are located between the feeding roller 200A and the collecting roller 200B in the conveyance direction, and are disposed side by side in the conveyance direction. The plurality of conveying rollers are located below the print parts 10A to 10H.

The feeding roller 200A, the collecting roller 200B, and the plurality of conveying rollers all extend in the width direction and each rotate about a rotation shaft extending in the width direction. The feeding roller 200A and the collecting roller 200B are each driven by the conveying motor. A print medium M which has a roll shape and in which the length in the conveyance direction is longer than the length in the width direction is attached to the feeding roller 200A. The print medium M fed from the feeding roller 200A by the rotation of the feeding roller 200A passes between the print parts 10A to 10H and the plurality of conveying rollers and is wound onto the collecting roller 200B by the rotation of the collecting roller 200B. With this, the print medium M is conveyed in the conveyance direction. The plurality of conveying rollers rotate as the print medium M is being conveyed. The conveying motor drives and rotates the feeding roller 200A and the collecting roller 200B so that the print medium M is conveyed while being in contact with the upper part of the circumferential surface of each of the plurality of conveying rollers.

Note that a period during which the conveyor 200 conveys the print medium M includes an acceleration period in which the conveying speed of the print medium M is increased up to a target value, a constant speed period in which the conveying speed of the print medium M is maintained within a predetermined range including the target value, and a deceleration period in which the conveying speed of the print medium M is decreased from the target value.

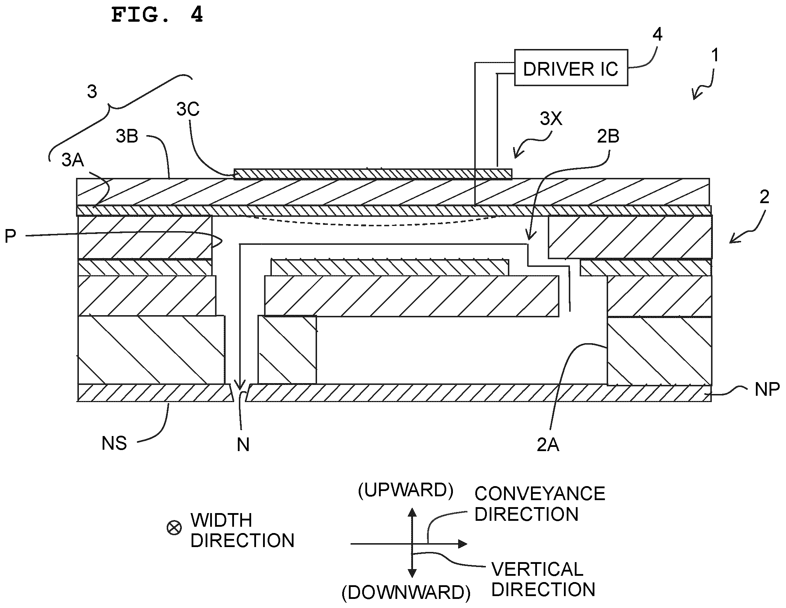

Next, the configuration of each of the ten heads 1 will be described. As depicted in FIG. 4, each of the ten heads 1 has a channel member 2 and an actuator member 3.

The channel member 2 is formed of a plurality of metallic plates and a nozzle plate NP which are stacked in the up-down direction. An ink channel which includes, for example, an individual channel 2B including a pressure chamber P, and a supply manifold 2A is formed in the plurality of metallic plates by etching. The nozzle plate NP is made, for example, of polymeric synthetized resin material such as polyimide, and is joined, with an adhesive, to the lower surface of the plurality of stacked metallic plates. The lower surface of the nozzle plate NP is the above-described nozzle surface NS, as an ink ejection surface, in which the plurality of nozzles N are open. Note that the nozzle plate NP may be made of a metallic material such as stainless steel.

The individual channel 2B which communicates with each of the plurality of nozzles N, and the supply manifold 2A which communicates with the individual channel 2B are formed in the inside of the channel member 2. Although not depicted in the drawings, the supply manifold 2A extends in the width direction (a direction perpendicular to the sheet surface of FIG. 4). The supply manifold 2A is connected to is connected to a non-illustrated tank disposed externally with respect to each of the ten heads 1 via a non-illustrate ink supply port formed in the channel member 2. The ink flowing from the tank flows into the supply manifold 2A via the ink supply port and is supplied from the supply manifold 2A to the individual channel 2B.

Further, although not depicted in the drawings, the channel member 2 has a plurality of individual channels 2B which are formed in the channel member 2 and each of which corresponds to a corresponding one of the plurality of nozzles N. Further, corresponding to the plurality of nozzles N forming two nozzle arrays extending in the width direction as described above, the plurality of individual channels 2B form two individual channel arrays each extending in the width direction. Furthermore, the supply manifold 2A communicates with the plurality of individual channel 2B forming the two individual channel arrays. Note that the number of the supply manifold 2A formed in the channel member 2 is adjusted in accordance with the number of the nozzles N. Furthermore, in a case where a plurality of supply manifolds 2A are formed, the number of individual channels 2B, included in the plurality of individual channels 2B and communicating with a corresponding one of the plurality of supply manifolds 2A is also adjusted in accordance with the number of the nozzles N.

As depicted in FIG. 4, the actuator member 3 is fixed to the upper surface of the channel member 2. The actuator member 3 includes a metallic vibration plate 3A, a piezoelectric layer 3B, and a plurality of individual electrodes 3C.

The actuator member 3 is formed by depositing a thin film which will be the piezoelectric layer 3B and a thin film which will be the plurality of individual electrodes 3C on the upper surface of the vibration plate 3A.

The vibration plate 3A is disposed on the upper surface of the channel member 2 so as to cover all the pressure chambers P. The vibration plate 3A is a metallic plate having a substantially rectangular shape in the plan view. The upper surface of the vibration plate 3A having the conductivity is located below the piezoelectric layer 3B. Therefore, the upper surface of vibration plate 3A can also serve as a common electrode. The vibration plate 3A as the common electrode is connected to a ground wiring of a driver IC 4 which drives the actuator member 3, and is always maintained at the ground potential. Note that the vibration plate 3A needs not necessarily be the metal plate. For example, the vibration plate 3A may be formed of the same piezoelectric material as the piezoelectric layer 3B, and a metallic film as the common electrode may be formed on the upper surface of the vibration plate 3A.

The piezoelectric layer 3B is disposed on the upper surface of the vibration plate 3A. The piezoelectric layer 3B is formed of a piezoelectric material composed primarily of lead zirconate titanate (PZT) which is a solid solution of lead titanate and lead zirconate and which is a ferroelectric substance. The piezoelectric layer 3B is polarized in the vertical direction at least at an area facing each of the pressure chambers 12a (a part, of the piezoelectric layer 3B, sandwiched between a corresponding one of the plurality of individual electrodes 3C and the vibration plate 43).

Each of the plurality of individual electrodes 3C is disposed on the upper surface of the piezoelectric layer 3B so as to overlap with a corresponding one of the pressure chambers P in the vertical direction. Further, the vibration plate 3A as the common electrode, each of the plurality of individual electrodes 3C, and a part of the piezoelectric layer 3B which is sandwiched between each of the individual electrodes 3C and the vibration plate 3A forms one actuator 3X.

In a case where a predetermined driving potential is applied to a certain individual electrode 3C, among the plurality of individual electrodes 3C, from driver IC 4, potential difference is generated between the certain individual electrode 3C to which the driving potential is applied and the vibration plate 3A as the common electrode which is maintained at the ground potential. With this, an electric field in the thickness direction acts on the part, of the piezoelectric layer 3B, sandwiched between the certain individual electrode 3C and the vibration plate 3A. The direction of the electric field is parallel to the polarization direction of the piezoelectric layer 3B. Accordingly, due to this electric field, an area (active area), of the piezoelectric layer 3B, which faces the certain individual electrode 3C contracts in a plane direction orthogonal to the thickness direction. Here, the vibration plate 3A which is disposed below the piezoelectric layer 3B is fixed to the channel member 2. Accordingly, accompanying with the part, of the piezoelectric layer 3B which is disposed on the upper surface of the vibration plate 3A, contracting in the plane direction, a part of the vibration plate 3A which covers a certain pressure chamber P, among the pressure chambers P, corresponding to the certain individual electrode 3C is deformed so as to project toward the certain pressure chamber 12a (unimorph deformation). In this situation, since the volume inside the certain pressure chamber P is reduced, the pressure of the ink inside the certain pressure chamber P is increased, thereby ejecting the ink from a certain nozzle N, among the plurality of nozzles P, communicating with the certain pressure chamber 12a. In other words, the actuator member 3 is located at a position corresponding to the pressure chamber P and applies pressure to the ink in the pressure chamber P so as to eject the ink from the nozzle N.

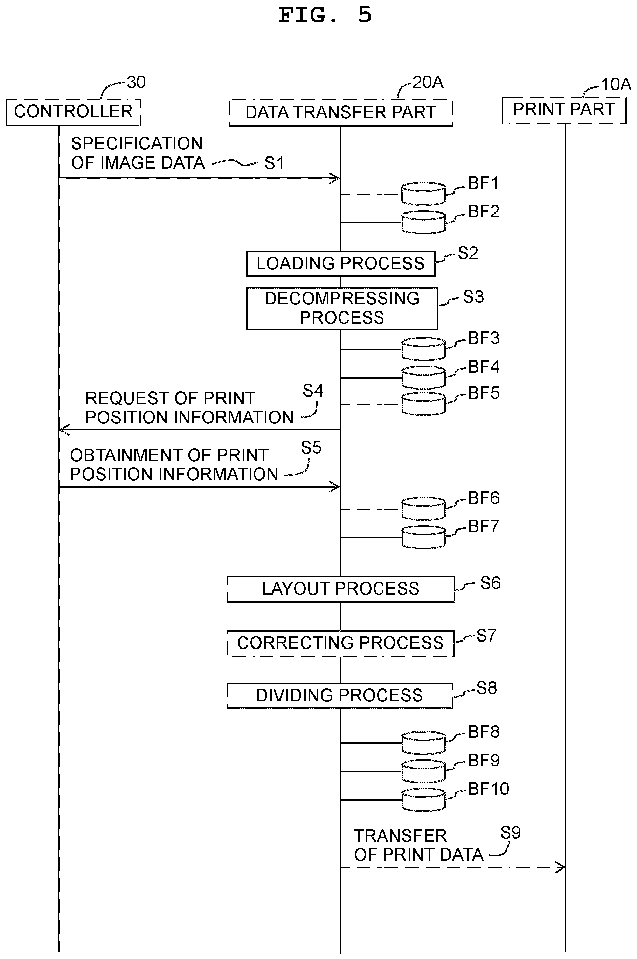

Next, the flow of the various processes executed by the data transfer parts 20A to 20H and the controller 30 in a case where an image is (to be) printed by ejecting the inks from the print parts 10A to 10H onto the print medium M which is (being) conveyed by the conveyor 200 will be described. The various processes executed by the data transfer parts 20A to 20H are realized by the processes 21A to 21H executing the programs stored in the storage parts 23A to 23H, respectively. Similarly, the various processes executed by controller 30 are also realized by the processors 31 executing the programs stored in storage parts 33. Note that since the flow of the various processes is common in the data transfer parts 20A to 20H, the description will be given in the following with respect to the data transfer part 20A, as an example, with reference to FIG. 5.

First, the processor 31 of the controller 30 specifies, with respect to the data transfer part 20A, image data regarding which the printing data to be transferred to the print part 10A is to be generated, based on the conveyance data of the print medium M obtained from the conveyor 200 (step S1). Specifically, the processor 31 transmits an image data ID, with which the image data is identified, to the data transfer part 20A. Note that as described above, the image data is generated by the image generating server S and stored in advance in the storage part 23A of the transfer part 20A in a state that the image data is associated with the image data ID.

In a case where the processor 21A of the data transfer part 20A receives the specification of the image data from the controller 30, the processor 21A executes a loading process (step S2) of loading the specified image data from the storage part 23A to the memory 22A. Next, processor 21A executes a decompressing process (step S3) with respect to the image data regarding which the loading process has been executed. The loading process (step S2) and the decompressing process (step S3) are an example of a "predetermined process" of the present invention.

In a case where the processor 21A has completed the decompressing process of the image data, the processor 21A requests print position information of the image data from the controller 30 (step S4), and obtains the print position information of the image data from the controller 30 (step S5). Note that the print position information indicates a print position of an image in the print medium, specifically, the position in the width direction of the image in the print medium. The print position information is stored in advance in the storage part 33 of the controller 30 in a state that the print position information is associated with the image data ID. In step S4, the processor 21A transmits the image data ID to the controller 30. In step S5, the controller 30 reads the print position information associated with the image data ID from the storage part 33 and transmits the print position information to the data transfer part 20A. The processes in steps S4 and S5 are an example of a "obtaining process" of the present invention.

Next, the processor 21A executes a layout process (S6) with respect to the image data decompressed in step S3, based on the print position information obtained in step S5. In the layout process, the processor 21A determines layout of the image data in the width direction of the print medium.

After executing the layout process, the processor 21A executes a correcting process (step S7). Here, information regarding the ejecting characteristic of each of the nozzles N of the print part 10A is stored in the storage part 23A of the data transfer part 20A. In the correcting process, the processor 21A performs correction with respect to the image data, regrading which the layout process has been executed, based on the information regarding the ejecting characteristic of each of the nozzles N stored in the storage part 23A.

Then, after executing the correcting process, the processor 21A executes a dividing process (step S8) of dividing the image data, regarding which the correcting process has been executed, for each of the heads 1 included in the print part 10A. The series of processes in steps S6 to S8 is an example of a "first generating process" of the present invention.

Lastly, the processor 21A transfers the image data, regarding which the dividing process has been executed, to the print part 10A as the printing data (step S9).

Here, as depicted in FIG. 5, buffers BF1 to BF10 are secured in the memory 22A of the data transfer part 20A, as areas for storing the image data standing by to be passed to the various processes. Image data IDs transmitted from the controller 30 and standing by to be passed to the loading process (step S2) are sequentially stored in the buffers BF2 and BF1. Multiple image data which are transmitted from the controller 30, regarding which the decompressing process (step S3) has been executed and which stand by to be passed to the layout process (step S6) are sequentially stored in the buffers BF7, BF6, BF5, BF4, and BF3. Further, multiple print position information transmitted from the controller 30 and standing by to be passed to the layout process (step S6) are sequentially stored in the buffers BF7 and BF6. Multiple image data regarding which the dividing process (step S8) has been executed and which stand by to be transferred to the print part 10 (step S9) are sequentially stored in the buffers BF10, BF9, and BF8. Then, the multiple image data stored, respectively, in the buffers BF10, BF9 and BF8 are transferred to the print part 10A in an order starting from the image data stored in the buffer BF10. Note that the request of the print position information by the processor 21A of the data transfer part 20A with respect to the controller 30 (step S4) and the obtainment of the print position information from the controller 30 (step S5) are executed at a timing at which the image data is stored in the buffer BF5.

Then, after step S9, the print part 10A prints the image on the print medium M based on the printing data transferred from the data transfer part 20A. Specifically, in each of the heads 1 of the print part 20A, the driver IC 4 generates a driving waveform with respect to each of the actuators 3X based on the printing data, and then applies the driving waveform with respect to the individual electrode 3C constructing each of the actuators 3X. As each of the actuators 3X is driven based on the driving waveform, the pressure chamber P corresponding to each of the actuators 3X is deformed, thereby ejecting the ink from the nozzle P communicating the pressure chamber P to the print medium M.

Next, a process of changing the print position of an image in the print medium M during printing of the image on the print medium M will be described.

As described above, the printing apparatus 100 is the digital printing apparatus and may be used in the same line as an analog printing apparatus, in some cases. For example, such a case is presumed wherein the analogue printing apparatus prints a background image on a print medium M, and then the printing apparatus 100 further prints an image on top of the background image. In this presumed case, the print position of the background image printed by the analogue printing apparatus and the image printed by the printing apparatus 100 are to be matched.

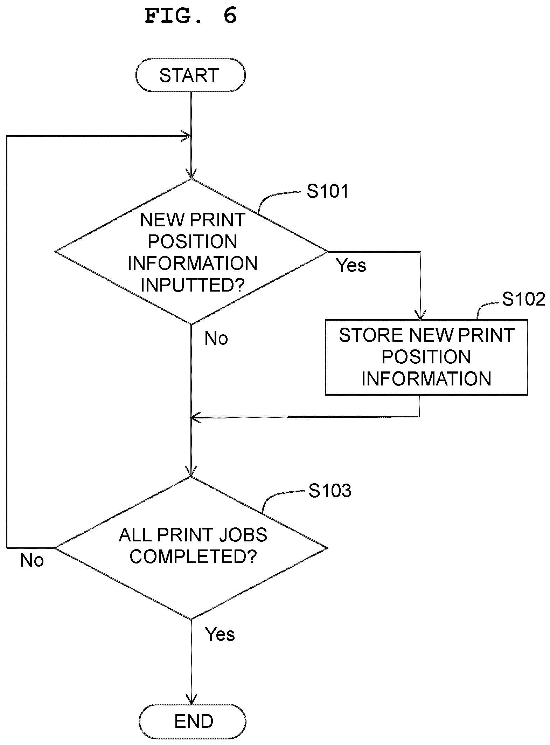

In general, the analogue printing apparatuses and the digital printing apparatuses are required to perform printing, for example, continuously on a print medium M which has a length of approximately 2 km. Therefore, in a case where any positional deviation from the background image is detected during printing by the printing apparatus 100, the printing apparatus 100 is to change the print position during the printing by the printing apparatus 100, and to correct the positional deviation. Therefore, the controller 30 of the printing apparatus 100 executes a print position information-updating process depicted in FIG. 6 during the printing on the print medium M, that is, during the constant speed period of the conveyance period by the conveyor 200 as described above.

The print position information-updating process of FIG. 6 is started as first print job is started, in other words, as the controller 30 specifies first image data with respect to the data transfer parts 20A to 20H.

In a case where the print position information-updating process is started, the processor 31 of the controller 30 determines whether new print position information is inputted to the input part 34 by a user of the printing apparatus 100 (step S101).

In a case where the processor 31 determines that the new print position information has been inputted (step S101: YES), the processor 31 causes the storage part 33 to store the new print position information (step S102).

After the processor 31 causes the storage part 33 to store the new print position information 3 or in a case where the processer 31 determines that any new print information has not been inputted in step S101 (step S101: NO), the processor 31 determines whether all the print jobs are completed (step S103).

In a case where the processor 31 determines that all the print jobs are not completed (step S103: NO), the processor 31 executes the process of step S101 again. On the other hand, in a case where the processor 31 determines that all the print jobs are completed (step S103: YES), the processor 31 terminates the print position information-updating process.

Further, the new print position information stored in the storage part 33 in step S102 is obtained by the data transfer parts 20A to 20H in steps S4 and S5 depicted in FIG. 5. The data transfer parts 20A to 20H execute the various processes in steps S6 to S8 depicted in FIG. 5 based on the new print position information. As a result, the image data in which the print position has been changed is generated as new printing data, and the new printing data is transferred to the print parts 10 A to 10H in step S9 depicted in FIG. 5. Note that the new print position information is an example of "another print position information" of the present invention. The series of processes executed by the data transfer parts 20A to 20H in steps S6 to S8 based on the new print position information is an example of a "second generating process" of the present invention. The printing data generated by the execution of the series of processes of steps S6 to S8 by the data transfer parts 20A to 20B based on the new print position information is an example of "another printing data" of the present invention.

After step S9, the print parts 10A to 10H print the image on the print medium M based on the new printing data transferred from the data transfer parts 20A to 20H. In other words, the print parts 10A to 10H change the print position of the image in the print medium M during the constant speed period in the period, during which the conveyor 200 conveys the print medium M. A process in which the print parts 10A to 10H change the print position of the image in the print medium M based on the new printing data is an example of a "changing process" of the present invention.

Note that each of the print parts 10A to 10H changing the print position of the image in the print medium M means changing the partial image printed by each of the heads 1. For example, the image includes a first partial image and a second partial image. Further, changing the partial image means changing a certain nozzle N which ejects the ink in each of the heads 1 to another nozzle N of which position in the width direction is different from the position in the width direction of the certain nozzle N. Namely, the above-described changing of the nozzles means that the driving waveform inputted to an actuator 3X corresponding to the certain nozzle N before the change is inputted to another actuator 3X corresponding to the another nozzle N. The certain nozzle N which ejects the ink before the change and the another nozzle N after the change may be included in the same head 1 or in two heads 1 adjacent to each other in the width direction. Specifically, in a first head 1 and a second head 1 adjacent to each other in the width direction, the driving waveform inputted to an actuator 3X corresponding to a certain nozzle N included in the first head 1 may be inputted to another actuator 3X corresponding to another nozzles N included in the second head 1.

As described above, in the printing apparatus 100 according to the present embodiment, after the data transfer part 20A receives the specification of the image data from the controller 30, the data transfer part 20A executes the loading process (step S2) and the decompressing process (step S3) of the specified image data. Further, after completing the decompressing process (step S3) with respect to the specified image data, the data transfer part 20A obtains the print position information of the above-described image data from the controller 30 (steps S4 and S5). In other words, the data transfer part 20A obtains the print position information of the image data after receiving the specification of the image data.

Here, such a configuration is presumed in which the data transfer part 20A obtains the print position information together with the specification of the image data in step S1. In a case where the print position is to be changed in this configuration, the data transfer part 20A obtains new print position information in step S1. Then, the image data based on the new print position information needs to stand by until the image data stored maximally in the ten buffers (BF1 to BF10) are transferred to print part 10A.

In this regard, the data transfer part 20A of the present embodiment obtains the new print position information in steps S4 and S5 in a case where the print position is to be changed. Therefore, the image data based on the new print position information may stand by until the image data stored maximally in the five buffers (BF6 to BF10) are transferred to the print part 10A. In other words, the time from the instruction for changing the print position has been received and until the print position is actually changed can be shortened.

Further, the layout process (step S6), the correcting process (step S7), and the dividing process (step S8) by the data transfer part 20A as described above may be executed only after the print position information has been obtained. Furthermore, the data transfer part 20A obtains the print position information (steps S4 and S5) immediately before the layout process (step S6), which leads to such a concern that the generation of the printing data by the processes in steps S6 to S8 might not be completed in time with respect to the transfer of the printing data to the print part 10A (step S9).

In this regard, the data transfer part 20A of the present embodiment executes the decompressing process (step S3) which is not affected by the print position and which requires a relatively long processing time, before obtaining the print position information. With this, the processing time from the obtainment of the print position information until the transfer of the printing data to the print part 10A can be shortened. As a result, the number of buffers which store the printing data standing by for the transfer to the print part 10A can be made small.

### (Modification)

The above-described embodiment is, in all respects, illustrative and not restrictive. All or part of the configuration described in the foregoing embodiment is not necessarily indispensable, and can be changed or omitted as appropriate.

In the above-described embodiment, the print position information indicates the position in the width direction of the image in the print medium, but the present invention is not limited to this. For example, the print position information may indicate a position in the conveyance direction of the image in the print medium. Alternatively, the print position information may indicate both the position in the conveyance direction of the image and the position in the width direction of the image in the print medium. Note that, in order to change the print position in the conveyance direction of the image in the print medium, the driving timing of each of the actuators 3X may be changed in each of the print parts 10A to 10H, thereby changing the timing of ejecting the ink from each of the nozzles N.

In the above-described embodiment, although the new print position information is inputted, by the user, with respect to the input part 34 of controller 30, the present invention is not limited to this. For example, the image generating server S may have an input part and a storage part; and new print position information may be inputted, by the user, with respect to the input part of the image generating server S; and the new print position information may be stored in the storage part of the image generating server S. In this case, the data transfer parts 20A to 20H may obtain the new print position information from the storage part of the image generating server S.

In the above-described embodiment, although the printing apparatus 100 includes the print parts 10A to 10H, the number and disposition of the print parts may be changed as appropriate. Further, in the above-described present embodiment, although the printing apparatus 100 includes the data transfer parts 20A to 20H connected one-to-one to the print parts 10A to 10H, the number and disposition of the data transfer parts may also be changed as appropriate. For example, the printing apparatus 100 may include one data transfer part connected to all the print parts, or may include a plurality of data transfer parts, and each of the plurality of data transfer parts may be connected to one print part or one or more print parts.

Further, the number and disposition of the heads 1 included in each of the print parts may also be changed as appropriate. Furthermore, the number and disposition of the nozzle N included in each of the heads 1 may also be changed as appropriate.

Moreover, in the above-described embodiment, although the black, cyan, violet, magenta, orange, yellow, and white inks are ejected from the print parts 10A to 10H, the present invention is not limited to this. The inks of appropriate colors may be ejected from the print parts 10A to 10H.

In the above-described embodiment, although the conveyor 200 is disposed separately from the printing apparatus 100, and the conveyor 200 is not an object to be controlled by the controller 30, the present invention is not limited to this. The printing apparatus 100 may include the conveyor 200, and the controller 30 may control the conveyance of the print medium M using the conveyor 200.

In the above-described embodiment, although the roll sheet is used as the print medium M, a medium made of an appropriate material may be used as needed. For example, the print medium M may be a resin film wound in a roll shape, cloth wound in a roll shape, etc.

### REFERENCE SINGS LIST

- 1: head
- 2: channel member
- 3: actuator member
- 4: driver IC
- 10A to 10H: print part
- 20A to 20H: data transfer part
- 30: controller
- 100: printing apparatus
- 200: conveyor
- S: image generating server

## Claims

1. A printing apparatus configured to print an image on a print medium, comprising:
a data transfer part having a storage part configured to store image data indicating the image, the data transfer part being configured to generate printing data from the image data stored in the storage part;
a print part configured to print the image on the print medium based on the printing data; and
a controller configured to instruct the data transfer part to execute a predetermined process with respect to the image data and to transfer the printing data to the print part,
wherein the data transfer part is configured to execute:
an obtaining process of obtaining position information indicating a print position of the image in the print medium, after executing the predetermined process with respect to the image data; and
a first generating process of generating the printing data based on the image data and the position information, after executing the predetermined process with respect to the image data, and
the position information indicates the print position of the image in the print medium in a conveyance direction of the print medium, the print position of the image in the print medium in a width direction of the print medium orthogonal to the conveyance direction, or both the print position of the image in the print medium in the conveyance direction and the print position of the image in the print medium in the width direction.

2. The printing apparatus according to claim 1, further comprising an input part,
wherein in a case where another position information different from the position information is inputted to the input part while the print part is printing the image on the print medium a plurality of times in succession,
the data transfer part is configured to execute a second generating process of generating another printing data different from the printing data, based on the image data and the another position information, after the predetermined process has been executed with respect to the image data, and
the print part is configured to execute a changing process of changing the print position of the image in the print medium based on the another printing data.

3. The printing apparatus according to claim 2, wherein the controller includes the input part.

4. The printing apparatus according to claim 2, wherein
the print medium has a length in the conveyance direction which is longer than a length in the width direction,
the printing apparatus further comprises a conveyor having a feeding roller and a collecting roller, the print medium having a roll shape being attached to the feeding roller, the collecting roller winding up the print medium fed from the feeding roller, the conveyor conveying the print medium by feeding the print medium from the feeding roller and winding up the print medium around the collecting roller,
the conveyor conveys the print medium for a period including an acceleration period, a constant speed period and deceleration period, a conveying speed of the print medium being increased up to a target value in the acceleration period, the conveying speed being maintained within a predetermined range including the target value in the constant speed period, the conveying speed being decreased from the target value in the deceleration period,
the another position information is inputted to the input part during the constant speed period, and
the print part is configured to execute the changing process in the constant speed period.

5. The printing apparatus according to claim 4, wherein
the print part includes an ink-jet head,
the ink-jet head includes:
a first nozzle;
a first pressure chamber communicating with the first nozzle;
a first actuator corresponding to the first pressure chamber and configured to apply pressure to ink in the first pressure chamber;
a second nozzle located at a position different from a position of the first nozzle in the width direction;
a second pressure chamber communicating with the second nozzle; and
a second actuator corresponding to the second pressure chamber and configured to apply the pressure to the ink in the second pressure chamber,
in the changing process, the print part is configured to input, to the second actuator, a driving waveform inputted to the first actuator before the changing process.

6. The printing apparatus according to claim 4 or 5, wherein
the print part includes a first ink-jet head and a second ink-jet head disposed side by side in the width direction,
the first ink-jet head includes:
a first nozzle;
a first pressure chamber communicating with the first nozzle;
a first actuator corresponding to the first pressure chamber and configured to apply pressure to ink in the first pressure chamber;
a second nozzle located at a position different from a position of the first nozzle in the width direction;
a second pressure chamber communicating with the second nozzle;
a second actuator corresponding to the second pressure chamber and configured to apply pressure to the ink in the second pressure chamber;
a third nozzle located at a position different from a position of each of the first and second nozzles in the width direction;
a third pressure chamber communicating with the third nozzle; and
a third actuator corresponding to the third pressure chamber and configured to apply pressure to the ink in the third pressure chamber,
the second ink-jet head includes:
a fourth nozzle;
a fourth pressure chamber communicating with the fourth nozzle; and
a fourth actuator corresponding to the fourth pressure chamber and configured to apply pressure to ink in the fourth pressure chamber,
the image includes a first partial image to be printed using the first ink-jet head and a second partial image to be printed using the second ink-jet head,
the changing process includes:
a first partial image-changing process of changing a print position of the first partial image in the print medium, and
a second partial image-changing process of changing a print position of the second partial image in the print medium,
in the first partial-image changing process, the print part is configured to input, to the second actuator, a driving waveform inputted to the first actuator before the first partial image-changing process, and
in the second partial image-changing process, the print part is configured to input, to the fourth actuator, a driving waveform inputted to the third actuator before the first partial image-changing process.

7. The printing apparatus according to claim 4, 5 or 6, wherein
a background image is printed on the print medium, and
the print part is configured to print the image on the background image.

8. The printing apparatus according to any one of claims 1 to 7, wherein in the obtaining process, the data transfer part is configured to request the position information from the controller after executing the predetermined process and to obtain the position information from the controller.

9. The printing apparatus according to any one of claims 1 to 8, wherein the predetermined process is a decompressing process with respect to the image data.

10. A printing method for printing an image on a print medium by a printing apparatus including a print part and a storage part, the printing method comprising:
causing the storage part to store image data indicating the image;
executing a predetermined process with respect to the image data stored in the storage part;
obtaining position information indicating a print position of the image in the print medium, after executing the predetermined process with respect to the image data;
generating printing data based on the image data and the position information, after executing the predetermined process with respect to the image data; and
causing the print part to perform printing the image on the print medium based on the printing data,
wherein the position information indicates the print position of the image in the print medium in a conveyance direction of the print medium, the print position of the image in the print medium in a width direction of the print medium orthogonal to the conveyance direction, or both the print position of the image in the print medium in the conveyance direction and the print position of the image in the print medium in the width direction.

11. A printing program for a printing apparatus configured to print an image on a print medium, the printing apparatus including: a data transfer part having a storage part configured to store image data indicating the image, and the data transfer part being configured to generate printing data from the image data stored in the storage part; a print part configured to print the image on the print medium based on the printing data; and a controller configured to instruct the data transfer part to execute a predetermined process with respect to the image data and to transfer the printing data to the print part,
the printing program causing the data transfer part to:
execute the predetermined process with respect to the image data stored in the storage part, in accordance with instruction from the controller;
obtain position information indicating a print position of the image in the print medium, after causing the data transfer part to execute the predetermined process with respect to the image data
generate the printing data based on the image data and the position information, after causing the data transfer part to execute the predetermined process with respect to the image data; and
transfer the printing data to the print part,
wherein the position information indicates the print position of the image in the print medium in a conveyance direction of the print medium, the print position of the image in the print medium in a width direction of the print medium orthogonal to the conveyance direction, or both the print position of the image in the print medium in the conveyance direction and the print position of the image in the print medium in the width direction.
